(19)

Europäisches
Patentamt

European
Patent Office

Office européen
des brevets

(11) **EP 3 640 203 A1**

(12) **EUROPEAN PATENT APPLICATION**

published in accordance with Art. 153(4) EPC

(43) Date of publication:
**22.04.2020 Bulletin 2020/17**

(21) Application number: **18817978.2**

(22) Date of filing: **23.03.2018**

(51) Int Cl.:
*C01B 32/225* [(2017.01)]  *C01B 32/15* [(2017.01)]
*C01B 32/342* [(2017.01)]  *H01G 11/24* [(2013.01)]
*H01G 11/42* [(2013.01)]  *H01M 4/36* [(2006.01)]
*H01M 4/587* [(2010.01)]

(86) International application number:
**PCT/JP2018/011781**

(87) International publication number:
**WO 2018/230080 (20.12.2018 Gazette 2018/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.06.2017 JP 2017117711**
**13.07.2017 JP 2017137025**
**09.01.2018 JP 2018001260**

(71) Applicant: **Sekisui Chemical Co., Ltd.**
**Osaka-shi, Osaka 530-8565 (JP)**

(72) Inventors:
• **OHARA, Shunji**
**Mishima-gun**
**Osaka 618-0021 (JP)**
• **WADA, Takuya**
**Mishima-gun**
**Osaka 618-0021 (JP)**

(74) Representative: **Ter Meer Steinmeister & Partner**
**Patentanwälte mbB**
**Nymphenburger Straße 4**
**80335 München (DE)**

(54) **CARBON MATERIAL AND METHOD FOR PRODUCING SAME, ELECTRODE MATERIAL FOR ELECTRICITY STORAGE DEVICE, AND ELECTRICITY STORAGE DEVICE**

(57) To provide a carbon material that can enhance capacity and rate characteristics of an electricity storage device. A carbon material containing a carbon material having a graphene layered structure, the carbon material having a mesopore, the mesopore having a volume measured in accordance with BJH method of 0.04 mL/g or more, and the carbon material having a BET specific surface area of 240 m$^2$/g or more.

[FIG. 1]

**Description**

**TECHNICAL FIELD**

The present invention relates to a carbon material containing a carbon material having a graphene layered structure, a method for producing the same, and an electrode material for an electricity storage device and an electricity storage device including the carbon material.

**BACKGROUND ART**

Conventionally, carbon materials such as graphite, activated carbon, carbon nanofibers and carbon nanotubes are widely used as electrode materials for electricity storage devices such as capacitors and lithium ion secondary batteries, from environmental aspects.

For example, the following Patent Document 1 discloses a non-aqueous electrolyte storage element including porous carbon having pores with a three-dimensional network structure as an electrode material. In Patent Document 1, the porous carbon is used as a positive electrode active material capable of inserting and removing anions. Therefore, Patent Document 1 describes that the pore volume of the porous carbon is preferably 0.2 mL/g or more.

Further, the following Patent Document 2 discloses a capacitor electrode material containing a resin remaining partially exfoliated graphite having a structure in which graphite is partially exfoliated, with part of the resin remaining, and a binder resin. In Patent Document 2, the resin remaining partially exfoliated graphite is obtained by thermally decomposing a resin in a composition in which the resin is fixed to graphite or primary exfoliated graphite by grafting or adsorption.

**Related Art Document**

**Patent Documents**

Patent Document 1: WO 2016/143423
Patent Document 2: WO 2015/098758

**SUMMARY OF THE INVENTION**

**PROBLEMS TO BE SOLVED BY THE INVENTION**

In recent years, in the field of electricity storage devices such as capacitors and lithium ion secondary batteries, further higher capacity is required. Therefore, even with electricity storage devices including electrode materials such as those in Patent Document 1 and Patent Document 2, capacity is still insufficient. In addition, in the electricity storage devices including electrode materials such as those in Patent Document 1 and Patent Document 2, rate characteristics are also insufficient.

An object of the present invention is to provide a carbon material, a method for producing the carbon material, an electrode material for an electricity storage device and an electricity storage device including the carbon material, which can enhance capacity and rate characteristics of the electricity storage device.

**MEANS FOR SOLVING THE PROBLEMS**

A broad aspect of a carbon material according to the present invention is a carbon material comprising a carbon material having a graphene layered structure, the carbon material having a mesopore, the mesopore having a volume measured in accordance with BJH method of 0.04 mL/g or more, and the carbon material having a BET specific surface area of 240 m$^2$/g or more.

In a specific aspect of the carbon material according to the present invention, the carbon material has a BET specific surface area of 450 m$^2$/g or more.

In another specific aspect of the carbon material according to the present invention, the carbon material has a BET specific surface area of 1100 m$^2$/g or more.

In another specific aspect of the carbon material according to the present invention, the carbon material having a graphene layered structure is graphite or exfoliated graphite.

In still another specific aspect of the carbon material according to the present invention, the graphite or exfoliated graphite is partially exfoliated graphite having a graphite structure in which graphite is partially exfoliated.

Another broad aspect of the carbon material according to the present invention is a carbon material comprising a carbon material having a graphene layered structure, the carbon material having a mesopore, and when a volume of the mesopore measured in accordance with BJH method is A (mL/g) and a BET specific surface area of the carbon material is B ($m^2$/g), the carbon material satisfying A $\times$ B $\geq$ 10.

In still another specific aspect of the carbon material according to the present invention, the carbon material further contains a resin and/or a resin carbide. Preferably, a content of the resin and/or the resin carbide is 1% by weight or more and 99.9% by weight or less.

A method for producing a carbon material according to the present invention is a method for producing the carbon material configured according to the present invention, comprising a mixing step of mixing graphite or primary exfoliated graphite and a resin; a step of further mixing an activator in the mixing step or after the mixing step to obtain a mixture; and a step of subjecting the mixture to an activation treatment.

In a specific aspect of the method for producing the carbon material according to the present invention, in the mixing step, a composition containing the graphite or primary exfoliated graphite and the resin is heated at a temperature of 200°C to 500°C.

In another specific aspect of the method for producing the carbon material according to the present invention, in the mixing step, a mixture of the graphite or primary exfoliated graphite, the resin and the activator is heated at a temperature of 200°C to 500°C.

An electrode material for an electricity storage device according to the present invention contains the carbon material configured according to the present invention.

An electricity storage device according to the present invention includes an electrode composed of the electrode material for an electricity storage device configured according to the present invention.

## EFFECT OF THE INVENTION

According to the present invention, it is possible to provide a carbon material, a method for producing the carbon material, an electrode material for an electricity storage device and an electricity storage device including the carbon material, which can enhance capacity and rate characteristics of the electricity storage device.

## BRIEF DESCRIPTION OF DRAWING

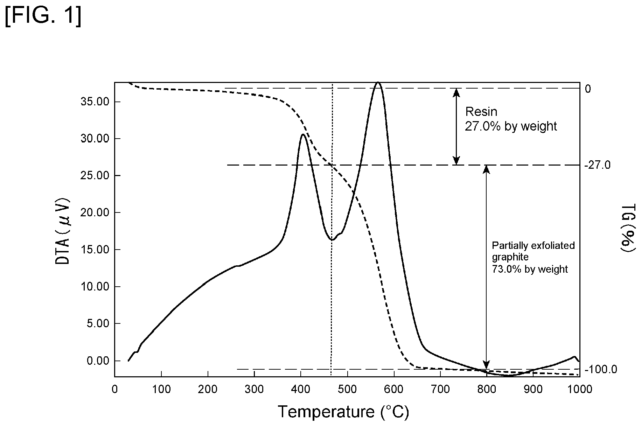

[Fig. 1] Fig. 1 is a diagram showing a result of a differential thermal analysis of a carbon material in Example 1.

## MODES FOR CARRYING OUT THE INVENTION

Hereinafter, the details of the present invention will be described.

(Carbon material)

The carbon material of the present invention contains a carbon material having a graphene layered structure. The carbon material of the present invention has a mesopore. The volume of the mesopore is 0.04 mL/g or more. Also, the BET specific surface area of the carbon material of the present invention is 240 $m^2$/g or more.

In this specification, the mesopore refer to a pore having a pore diameter of 2 nm or more and 50 nm or less. The volume of the mesopore refers to a sum of volumes of all mesopores (total mesopore volume) in the carbon material. The volume of the mesopore can be measured, for example, by a gas adsorption method, BJH (Barret, Joyner, Hallender) method.

As described above, in the carbon material of the present invention containing a carbon material having a graphene layered structure, the volume of the mesopore is increased as 0.04 mL/g or more, and the BET specific surface area is increased as 240 $m^2$/g or more. Since the specific surface area is increased, the carbon material of the present invention can effectively enhance the capacity and rate characteristics of an electricity storage device when used as an electrode material of the electricity storage device.

The rate characteristic refers to a numerical value obtained by numerically expressing a difference in electrostatic capacitance obtained when charging and discharging the electricity storage device at different current application rates, and is obtained by dividing an electrostatic capacitance at a high charge/discharge rate by an electrostatic capacitance at a low charge/discharge rate. It indicates that one showing a higher value of rate characteristic can show similar electrostatic capacitance both at the low charge/discharge rate and at the high charge/discharge rate, suggesting that it is an electrode capable of high speed charging and discharging.

In the present invention, the BET specific surface area of the carbon material is preferably 450 $m^2$/g or more,

more preferably 1100 m$^2$/g or more, preferably 4000 m$^2$/g or less, and more preferably 3500 m$^2$/g or less.

In the present invention, the volume of the mesopore is 0.04 mL/g or more, preferably 0.05 mL/g or more, and further preferably 0.1 mL/g or more. The upper limit of the volume of the mesopore is not particularly limited, but it is preferably 20 mL/g or less, and more preferably 1 mL/g or less. When the volume of the mesopore is equal to or more than the above lower limit, the electrolytic solution more easily permeates a surface of the carbon material, and a wide specific surface area can be more effectively utilized, so that the capacity of the electricity storage device can be further increased.

In the carbon material of the present invention, a pore such as a micropore may be provided in addition to the mesopore. The volume of the micropore is preferably 1.0 mL/g or less, and more preferably 0.8 mL/g or less. The lower limit of the volume of the micropore is not particularly limited, but is preferably 0.01 mL/g or more. The micropore contributes to the improvement of the specific surface area, but since the pore size is small, the electrolytic solution hardly permeates, and the surface area is not easily utilized as a battery. When the volume of the micropore is equal to or less than the above upper limit, the electrolytic solution more easily permeates the surface of the carbon material, and a wide specific surface area can be more effectively utilized, so that the capacity of the electricity storage device can be further increased.

In this specification, the micropore refers to a micropore having a pore diameter of less than 2 nm. The volume of the micropore can be measured, for example, by the gas adsorption method, BJH (Barret, Joyner, Hallender) method. Also, the volume of the micropore refers to a sum of volumes of all micropores in the carbon material.

Another broad aspect of the carbon material according to the present invention is also a carbon material containing a carbon material having a graphene layered structure, and the carbon material has a mesopore. Further, when the volume of the mesopore measured in accordance with BJH method is A (mL/g) and the BET specific surface area of the carbon material is B (m$^2$/g), the carbon material satisfies $A \times B \geq 10$. Preferably, $A \times B \geq 15$, and more preferably $A \times B \geq 20$. When $A \times B$ is equal to or more than the above lower limit, the electrolytic solution more easily permeates the surface of the carbon material, and a wide specific surface area can be more effectively utilized. Therefore, the capacity of the electricity storage device can be further increased. Although the upper limit value of $A \times B$ is not particularly limited, it can be set to, for example, $A \times B \leq 10000$.

Further, the carbon material of the present invention may be composed of only a carbon material having a graphene layered structure, or may be composed of a carbon material having a graphene layered structure and another carbon material. It may further contain a resin and/or a resin carbide. When another carbon materials, a resin and/or a resin carbide are contained in addition to the carbon material having a graphene layered structure, the volumes of all mesopores and micropores and the BET specific surface area are to be determined.

In the present invention, examples of the carbon material having a graphene layered structure include graphite and exfoliated graphite. Whether or not it has a graphene layered structure can be confirmed by whether or not a peak around $2\theta = 26°$ (peak derived from the graphene layered structure) is observed when X-ray diffraction spectrum of the carbon material is measured using CuK$\alpha$ ray (wavelength 1.541 Å). The X-ray diffraction spectrum can be measured by a wide angle X-ray diffraction method. As an X-ray diffraction apparatus, for example, SmartLab (manufactured by Rigaku Corporation) can be used.

Graphite is a laminate of a plurality of graphene sheets. The number of layered graphene sheets of graphite is usually about 100,000 to 1 million layers. As the graphite, for example, natural graphite, artificial graphite, expanded graphite or the like can be used. Expanded graphite has a high proportion that the interlayer distance between graphene layers is larger than that of ordinary graphite. Therefore, it is preferable to use expanded graphite as the graphite.

Exfoliated graphite refers to a graphene sheet laminate which is obtained by exfoliating original graphite and is thinner than the original graphite. The number of laminated graphene sheets in the exfoliated graphite may be smaller than that of the original graphite. The exfoliated graphite may be oxidized exfoliated graphite.

In the exfoliated graphite, the number of laminated graphene sheets is not particularly limited, but preferably 2 or more layers, more preferably 5 or more layers, preferably 1000 layers or less, and more preferably 500 layers or less. When the number of laminated graphene sheets is equal to or more than the above lower limit, it is suppressed that the exfoliated graphite scrolls in the liquid or the exfoliated graphites are stacked, so that conductivity of the exfoliated graphite can be further enhanced. When the number of laminated graphene sheets is equal to or less than the above upper limit, the specific surface area of the exfoliated graphite can be further increased.

Further, it is preferable that the exfoliated graphite is partially exfoliated graphite having a structure in which graphite is partially exfoliated.

More specifically, the phrase "graphite is partially exfoliated" refers that in the laminate of graphene, the graphene layers are spaced from each other from the end edge to a certain inside portion, that is, a part of the graphite at the edge (edge part) is exfoliated. Also, the graphite layer has laminar structure as with the original graphite or primary exfoliated graphite in the center side part. Therefore, the part where a part of the graphite is exfoliated at the edge is continuous with the center side part. In addition, the partially exfoliated graphite may include one in which graphite at the edge is exfoliated and flaked.

In this manner, in the partially exfoliated graphite, the graphite layer has laminar structure as with the original graphite or primary exfoliated graphite in the center side part. Thus, the partially exfoliated graphite has higher degree of graphitization than conventional graphene oxide and carbon black, and is excellent in conductivity. Therefore, when the partially exfoliated graphite is used for an electrode of an electricity storage device, the electronic conductivity in the electrode can be further increased, and charging and discharging with a larger current becomes possible.

Such partially exfoliated graphite can be obtained by preparing a composition containing graphite or primary exfoliated graphite and a resin, in which the resin is fixed to the graphite or primary exfoliated graphite by grafting or adsorption, and thermally decomposing the resin contained in the composition. When thermally decomposed, the resin may be thermally decomposed while a part of the resin remains, or the resin may be completely thermally decomposed.

More specifically, the partially exfoliated graphite can be produced, for example, in the same manner as the method for producing an exfoliated graphite/resin composite material described in WO 2014/034156. As described above, when thermally decomposed, the resin may be thermally decomposed while a part of the resin remains, or the resin may be completely thermally decomposed. As the graphite, it is preferable to use expanded graphite since it is possible to exfoliate graphite more easily.

Further, the primary exfoliated graphite is to broadly include exfoliated graphite obtained by exfoliating graphite by various methods. The primary exfoliated graphite may be partially exfoliated graphite. Since the primary exfoliated graphite is obtained by exfoliating graphite, its specific surface area may be larger than that of graphite.

The resin remaining in the partially exfoliated graphite is not particularly limited, but it is preferably a polymer of a radical polymerizable monomer. In this case, it may be a homopolymer of one type of radical polymerizable monomer or may be a copolymer of plural types of radical polymerizable monomers. The radical polymerizable monomer is not particularly limited as long as it is a monomer having a radically polymerizable functional group.

Examples of the radical polymerizable monomer include styrene, methyl α-ethylacrylate, methyl α-benzylacrylate, methyl α-[2,2-bis(carbomethoxy)ethyl]acrylate, dibutyl itaconate, dimethyl itaconate, dicyclohexyl itaconate, α-methylene-δ-valerolactone, α-methylstyrene, α-substituted acrylates composed of α-acetoxystyrene, vinyl monomers having a glycidyl group or a hydroxyl group such as glycidyl methacrylate, 3,4-epoxycyclohexylmethyl methacrylate, hydroxyethyl methacrylate, hydroxyethyl acrylate, hydroxypropyl acrylate, and 4-hydroxybutyl methacrylate; vinyl monomers having an amino group such as allylamine, diethylaminoethyl (meth)acrylate, and dimethylaminoethyl (meth)acrylate; monomers having a carboxyl group such as methacrylic acid, maleic anhydride, maleic acid, itaconic acid, acrylic acid, crotonic acid, 2-acryloyloxyethyl succinate, 2-methacryloyloxyethyl succinate, and 2-methacryloyloxyethylphthalic acid; monomers having a phosphate group such as Phosmer M, Phosmer CL, Phosmer PE, Phosmer MH, and Phosmer PP manufactured by Uni-Chemical Co., Ltd.; monomers having an alkoxysilyl group such as vinyltrimethoxysilane and 3-methacryloxypropyltrimethoxysilane; and (meth)acrylate-based monomers having an alkyl group, a benzyl group or the like.

Preferable examples of the resin to be used include polypropylene glycol, polyethylene glycol, styrene polymer (polystyrene), vinyl acetate polymer (polyvinyl acetate), polyglycidyl methacrylate, and butyral resin. The above resins may be used alone, or a plurality of types may be used in combination. Preferably, polyethylene glycol or polyvinyl acetate is used. When polyethylene glycol or polyvinyl acetate is used, the specific surface area of the partially exfoliated graphite can be further increased.

The amount of the resin remaining in the partially exfoliated graphite is preferably 1% by weight or more, more preferably 3% by weight or more, further preferably 10% by weight or more, particularly preferably 15% by weight or more, preferably 99% by weight or less, more preferably 95% by weight or less, further preferably 50% by weight or less, and particularly preferably 30% by weight or less. By making the amount of the resin equal to or more than the above lower limit and equal to or less than the above upper limit, battery characteristics of the electricity storage device can be further enhanced.

It is also possible to adjust the resin amount to an appropriate value by removing a part of the resin remaining in the partially exfoliated graphite. At this time, removal methods by heating, chemical treatment or the like are possible, and a part of the structure can also be modified.

The carbon material of the present invention may further contain a carbide derived from a resin, that is, a resin carbide, in addition to the above carbon material having a graphene layered structure. The resin carbide may be compounded with the carbon material having a graphene layered structure. Therefore, the carbon material of the present invention may be a composite of the carbon material having a graphene layered structure and the resin carbide. Also, a part of the resin may remain without being carbonized. In that case, the carbon material of the present invention may be a composite material of the carbon material having a graphene layered structure, the resin carbide, and the resin remaining without being carbonized.

When the carbon material further contains the resin carbide, the volume of the mesopore, the volume of the micropore and the BET specific surface area are to be measured for the carbon material including both the carbon material having a graphene layered structure and the resin carbide. When the carbon material is a composite of the carbon material having a graphene layered structure and the resin carbide, the volume of the mesopore, the volume of the micropore and the BET specific surface area of the composite are to be determined, respectively. Moreover, when the carbon material is a composite material of the carbon material having a graphene layered structure, the resin carbide and the resin remaining without being carbonized, the volume of the mesopore, the volume of the micropore and the BET specific surface area of the composite material are to be determined, respectively.

Examples of the resin used for the resin carbide include polypropylene glycol, polyethylene glycol, styrene polymer (polystyrene), vinyl acetate polymer (polyvinyl acetate), polyglycidyl methacrylate, polybutyral (butyral resin), polyacrylic acid, styrene butadiene rubber, polyimide resin, and fluorine-based polymers such as polytetrafluoroethylene and polyvinylidene fluoride. The above resins may be used alone, or a plurality of types may be used in combination. Preferably, polyethylene glycol or polyvinyl acetate is used.

In the present invention, the amount of the resin and/or the resin carbide contained in 100% by weight of the carbon material is preferably 1% by weight or more, more preferably 3% by weight or more, further preferably 10% by weight or more, particularly preferably 15% by weight or more, preferably 99% by weight or less, and more preferably 95% by weight or less. By making the amount of the resin equal to or more than the above lower limit and equal to or less than the above upper limit, battery characteristics of the electricity storage device can be further enhanced.

The carbon material of the present invention can be obtained by, for example, subjecting a composite of the carbon material having a graphene layered structure and the resin (and resin carbide) to an activation treatment.

More specifically, in the method for producing a carbon material of the present invention, first, graphite or primary exfoliated graphite and a resin are mixed (mixing step). Further, before or after the mixing step, an activator is further mixed to obtain a mixture. Next, by subjecting the mixture to an activation treatment, a carbon material can be obtained. In the mixing step, a surfactant such as carboxymethyl cellulose (CMC) may be further mixed with graphite or primary exfoliated graphite and a resin.

Moreover, the mixing step may include a heating step of, after mixing graphite or primary exfoliated graphite and a resin, heating the mixture. When the carbon material having a graphene layered structure is the partially exfoliated graphite, the heating in this heating step may be heating during pyrolysis at the time of producing the partially exfoliated graphite. Also, when the carbon material having a graphene layered structure is partially exfoliated graphite, the resin to be mixed in the mixing step may be a resin used at the time of producing the partially exfoliated graphite. That is, the mixing step may be a step of producing the partially exfoliated graphite.

The heating temperature in the heating step can be set to, for example, 200°C to 500°C. The heating may be performed in an atmosphere or in an inert gas atmosphere such as nitrogen gas. The activator may be mixed with the graphite or primary exfoliated graphite and the resin before the heating step and heated, or may be mixed after the heating step, that is, after heating the graphite or primary exfoliated graphite and the resin. In heating in the heating step or the activation step (activation treatment), a part of the resin may be carbonized, or the resin may be completely carbonized. Further, heating may not be performed in the mixing step but may be performed only in the activation step.

The method of the activation treatment is not particularly limited, and examples thereof include a chemical activation method and a gas activation method. Among them, from the viewpoint of further effectively increasing the specific surface area of the obtained carbon material, an alkali activation method is preferable.

The activator used in the alkali activation method is not particularly limited, and examples thereof include sodium hydroxide, potassium hydroxide, and potassium carbonate. Among them, from the viewpoint of further effectively increasing the specific surface area of the carbon material only at a high temperature during the activation treatment without affecting the resin to be compounded at room temperature in the case of compounding with the resin, potassium carbonate is preferable.

In the alkali activation method, such an activator and the carbon material having a graphene layered structure are mixed and subjected to an activation treatment. In this case, the activator and the carbon material having a graphene layered structure may be subjected to an activation treatment in a state of being physically mixed, or may be subjected to an activation treatment in a state in which the carbon material having a graphene layered structure is impregnated with the activator. From the viewpoint of further effectively increasing the specific surface area of the obtained carbon material, the activator and the carbon material having a graphene layered structure is preferably subjected to an activation treatment in a state in which the carbon material having a graphene layered structure is impregnated with the activator.

Also, the temperature of the activation treatment in the alkali activation method can be, for example, 600°C to 900°C. Further, the holding time at that temperature can be, for example, 30 minutes to 300 minutes. It is desirable that the activation treatment is performed in an inert gas atmosphere such as nitrogen gas or argon gas.

The activator used in the gas activation method is not particularly limited, and examples thereof include carbon dioxide, water vapor, and combustion gas.

Moreover, the temperature of the activation treatment in the gas activation method can be, for example, 600°C to 900°C. Further, the holding time at that temperature can be, for example, 30 minutes to 300 minutes.

The resin to be mixed with graphite or primary exfoliated graphite in the production process is not particularly limited, and examples thereof include polypropylene glycol, polyethylene glycol, polyglycidyl methacrylate, vinyl acetate polymer (polyvinyl acetate), polybutyral (butyral resin), polyacrylic acid, styrene polymer (polystyrene), styrene butadiene rubber, polyimide resin, and fluorine-based polymers such as polytetrafluoroethylene and polyvinylidene fluoride.

The resin to be mixed with the graphite or primary exfoliated graphite in the production step may be completely carbonized in the carbonization/activation step, or a part of the resin may remain as the resin.

When the carbon material of the present invention is used for an electrode of an electricity storage device, capacity and rate characteristics of the electricity storage device can be further enhanced. Therefore, it can be suitably used as an electrode material for an electricity storage device.

(Electrode material for electricity storage device and electricity storage device)

The electricity storage device of the present invention is not particularly limited, but example thereof includes a non-aqueous electrolyte primary battery, an aqueous electrolyte primary battery, a non-aqueous electrolyte secondary battery, an aqueous electrolyte secondary battery, a capacitor, an electric double layer capacitor, and a lithium ion capacitor. The electrode material for an electricity storage device of the present invention is an electrode material used for the electrode of the electricity storage device as described above.

Since the electricity storage device of the present invention includes an electrode composed of the electrode material for an electricity storage device containing the carbon material of the present invention, capacity and rate characteristics are enhanced.

In particular, since the specific surface area of the carbon material contained in the electrode material for an electricity storage device is increased as described above, capacity of a capacitor or a lithium ion secondary battery can be effectively increased. Examples of the capacitor include an electric double layer capacitor.

The electrode material for an electricity storage device can be used as an electrode of an electricity storage device by shaping the carbon material of the present invention including a binder resin and a solvent as required.

The electrode material for an electricity storage device can be shaped, for example, by forming the material into a sheet with a rolling roller and then drying the material. Alternatively, the electrode material for an electricity storage device may be shaped by applying a coating liquid composed of the carbon material of the present invention, a binder resin, and a solvent to a current collector and then drying the coating liquid.

As the binder resin, for example, polybutyral, polytetrafluoroethylene, styrene butadiene rubber, polyimide resin, acrylic resin, fluorine-based polymers such as polyvinylidene fluoride, water-soluble carboxymethylcellulose or the like can be used. Preferably, polytetrafluoroethylene can be used. When polytetrafluoroethylene is used, dispersibility and heat resistance can be further improved.

The blending ratio of the binder resin is preferably in the range of 0.3 parts by weight to 40 parts by weight and more preferably in the range of 0.3 parts by weight to 15 parts by weight with respect to 100 parts by weight of the carbon material. By setting the blending ratio of the binder resin within the above range, the capacity of the electricity storage device can be further enhanced.

As the solvent, ethanol, N-methylpyrrolidone (NMP), water, or the like can be used.

Further, when the electricity storage device is used for a capacitor, an aqueous system or a non-aqueous system (organic system) may be used as an electrolytic solution of the capacitor.

Examples of the aqueous electrolytic solution include an electrolytic solution including water as a solvent and sulfuric acid, potassium hydroxide or the like as an electrolyte.

On the other hand, as the non-aqueous electrolytic solution, for example, an electrolytic solution including the following solvents, electrolytes, or ionic liquids can be used. Specific examples of the solvent include acetonitrile, propylene carbonate (PC), ethylene carbonate (EC), dimethyl carbonate (DMC), diethyl carbonate (DEC), and acrylonitrile (AN) .

Also, examples of the electrolyte include lithium hexafluorophosphate (LiPF$_6$), lithium tetrafluoroborate (LiBF$_4$), tetraethylammonium tetrafluoroborate (TEABF$_4$), and triethylmethylammonium tetrafluoroborate (TEMABF$_4$).

Further, as the ionic liquid, for example, an ionic liquid having the following cations and anions can be used. Examples of the cation include an imidazolium ion, a pyridinium ion, an ammonium ion, and a phosphonium ion. Examples of the anion include a boron tetrafluoride ion (BF$_4^-$), a boron hexafluoride ion (BF$_6^-$), an aluminum tetrachloride ion (AlCl$_4^-$), a tantalum hexafluoride ion (TaF$_6^-$), and a tris (trifluoromethanesulfonyl) methane ion (C(CF$_3$SO$_2$)$_3^-$). When an ionic liquid is used, driving voltage can be further improved in the electricity storage device. That is, the energy density can be further improved.

Next, the present invention will be clarified by way of specific examples and comparative examples of the present invention. The present invention is not limited to the following examples.

(Example 1)

First, 4 g of expanded graphite (manufactured by TOYO TANSO CO., LTD., trade name "PF Powder 8", BET specific surface area = 22 m$^2$/g), 80 g of polyethylene glycol (PEG, manufactured by Wako Pure Chemical Industries, Ltd.) and 80 g of water as a solvent were mixed to prepare a raw material composition. The prepared raw material composition was irradiated with ultrasonic waves at 100 W and an oscillation frequency of 28 kHz for 6 hours, using an ultrasonic treatment apparatus (manufactured by HONDA ELECTRONICS Co., LTD.). The polyethylene glycol was adsorbed on the expanded graphite by ultrasonic irradiation. In this way, a composition in which the polyethylene glycol was adsorbed on the expanded graphite was prepared.

After the ultrasonic irradiation, the temperature was maintained at 150°C for 3 hours. Thereby, the water in the composition in which the polyethylene glycol was adsorbed on the expanded graphite was dried. Next, a heating step was performed in which the dried composition was maintained at a temperature of 370°C under a nitrogen atmosphere for 2 hours. Thereby, the polyethylene glycol was thermally decomposed to obtain partially exfoliated graphite. A part of the polyethylene glycol (resin) remains in this partially exfoliated graphite.

Next, 0.5 g of the obtained partially exfoliated graphite was immersed in an aqueous solution of potassium carbonate obtained by dissolving 0.5 g of potassium carbonate ($K_2CO_3$, manufactured by Wako Pure Chemical Industries, Ltd.) as an activator in 5.0 g of water. At that time, the weight ratio of the potassium carbonate to the partially exfoliated graphite was made equivalent (= impregnation ratio is 1).

Next, the partially exfoliated graphite immersed in potassium carbonate was subjected to an activation treatment by holding at a temperature (carbonization/activation temperature) of 800°C for 60 minutes under a nitrogen atmosphere. Finally, it was washed with hot water such that it is to be neutral and obtained a carbon material.

The content of the resin in the obtained carbon material was confirmed in the following manner using a simultaneous differential thermogravimetric analyzer (manufactured by Hitachi High-Technologies Corporation, trade name "STA7300"). Incidentally, the content of the resin is the content of the resin and/or the resin carbide, and it is also assumed to be the same in the following examples.

Approximately 2 mg of the carbon material was weighed in a platinum pan. The sample was measured from 30°C to 1000°C at a temperature raising rate of 10°C/min under a nitrogen atmosphere. From the differential thermal analysis result obtained by the measurement, a combustion temperature of the resin (polyethylene glycol) and that of the partially exfoliated graphite was separated, and from the thermal weight change accompanying this, the resin amount (% by weight) relative to the entire carbon material was calculated as shown in Fig. 1. In Example 1, the resin amount was 27.0% by weight. In Fig. 1, a DTA curve is shown by a solid line and a TG curve is shown by a broken line.

(Example 2)

A carbon material was obtained in the same manner as in Example 1, except that the temperature of the activation treatment (carbonization/activation temperature) was 900°C.

(Example 3)

First, 0.5 g of the partially exfoliated graphite obtained in the same manner as in Example 1 was immersed in an aqueous solution of potassium carbonate obtained by dissolving 1.0 g of potassium carbonate as an activator in 5.0 g of water. Thus, a carbon material was obtained in the same manner as in Example 1, except that the weight ratio of the potassium carbonate to the partially exfoliated graphite was doubled (= impregnation ratio is 2). The resin amount measured in the same manner as in Example 1 was 25.7% by weight.

(Example 4)

The partially exfoliated graphite obtained in the same manner as in Example 1, and powder form potassium carbonate as an activator without being dissolved in water were used. A carbon material was obtained in the same manner as in Example 1, except that 0.5 g of the partially exfoliated graphite and 0.5 g of potassium carbonate as an activator were physically mixed by shaking in a container and subjected to an activation treatment.

(Example 5)

A carbon material was obtained in the same manner as in Example 3, except that potassium hydroxide (KOH, manufactured by Wako Pure Chemical Industries, Ltd.) was used instead of potassium carbonate as an activator. The resin amount measured in the same manner as in Example 1 was 16.7% by weight.

(Example 6)

A carbon material was obtained in the same manner as in Example 1, except that sodium hydroxide (NaOH, manufactured by Wako Pure Chemical Industries, Ltd.) was used instead of potassium carbonate as an activator.

(Example 7)

A carbon material was obtained in the same manner as in Example 1, except that gas activation was performed using carbon dioxide gas ($CO_2$) instead of potassium carbonate as an activator. Specifically, 0.5 g of the partially exfoliated graphite obtained in the same manner as in Example 1 was held at a temperature (carbonization/activation temperature) of 800°C for 120 minutes under a carbon dioxide gas atmosphere. Thereby, the partially exfoliated graphite was subjected to an activation treatment to obtain a carbon material.

(Example 8)

First, 1 g of expanded graphite (manufactured by TOYO TANSO CO., LTD., trade name "PF Powder 8", BET specific surface area = 22 m²/g), 250 g of polyethylene glycol (PEG, manufactured by Wako Pure Chemical Industries, Ltd.) and 80 g of water as a solvent were mixed to prepare a raw material composition. The prepared raw material composition was irradiated with ultrasonic waves at 100 W and an oscillation frequency of 28 kHz for 6 hours, using an ultrasonic treatment apparatus (manufactured by HONDA ELECTRONICS Co., LTD.). The polyethylene glycol was adsorbed on the expanded graphite by ultrasonic irradiation and then dried at 130°C for 3 hours to prepare a composition in which the polyethylene glycol was adsorbed on the expanded graphite.
Next, 502 g of potassium carbonate ($K_2CO_3$, manufactured by Wako Pure Chemical Industries, Ltd.) as an activator was added to the dried composition, and the mixture was mixed homogeneously using a mill. Further, the obtained mixture was subjected to an activation treatment by maintaining the mixture at a temperature of 370°C under a nitrogen atmosphere for 1 hour, then raising the temperature to 800°C, and holding the mixture at a temperature (carbonization/activation temperature) of 800°C for 1 hour. Finally, it was washed with hot water such that it is to be neutral and obtained a carbon material.

(Example 9)

A composition in which an acrylic resin was adsorbed on the expanded graphite was prepared in the same manner as in Example 8, except that 127 g of Nikasol (manufactured by NIPPON CARBIDE INDUSTRIES CO., INC., solid content concentration: 55%) serving as a vinyl acetate resin emulsion was added instead of polyethylene glycol in Example 8.
Next, 140 g of potassium carbonate ($K_2CO_3$, manufactured by Wako Pure Chemical Industries, Ltd.) as an activator was added to the dried composition, and the mixture was mixed homogeneously using a mill. Further, the obtained mixture was subjected to an activation treatment by holding the mixture at a temperature (carbonization/activation temperature) of 800°C for 1 hour under a nitrogen atmosphere. Finally, it was washed with hot water such that it is to be neutral and obtained a carbon material.

(Example 10)

After obtaining a composition in which the polyethylene glycol was adsorbed on the expanded graphite in Example 8, the composition was heated at a temperature of 370°C for 1 hour under a nitrogen atmosphere and cooled to room temperature. To the obtained composition was added 502 g of potassium carbonate ($K_2CO_3$, manufactured by Wako Pure Chemical Industries, Ltd.), and the mixture was mixed homogeneously using a mill. The obtained mixture was heated to 800°C under a nitrogen atmosphere and subjected to an activation treatment by holding the mixture at a temperature (carbonization/activation temperature) of 800°C for 1 hour. Finally, it was washed with hot water such that it is to be neutral and obtained a carbon material.

(Example 11)

A carbon material was obtained in the same manner as in Example 10, except that the carbonization/activation temperature was 825°C.

(Example 12)

A carbon material was obtained in the same manner as in Example 10, except that the carbonization/activation temperature was 850°C.

(Comparative Example 1)

The partially exfoliated graphite obtained in the same manner as in Example 1 was used as it was as a carbon material without being subjected to an activation treatment. The resin amount measured in the same manner as in Example 1 was 47.9% by weight.

(Comparative Example 2)

As the carbon material, activated carbon not having a graphene layered structure (manufactured by Kuraray Chemical Co., Ltd., trade name "YP50F") was used as it was.

(Comparative Example 3)

First, 1 g of expanded graphite (manufactured by TOYO TANSO CO., LTD., trade name "PF Powder 8", BET specific surface area = 22 m$^2$/g) was immersed in an aqueous solution of potassium carbonate obtained by dissolving 1 g of potassium carbonate ($K_2CO_3$, manufactured by Wako Pure Chemical Industries, Ltd.) as an activator in 5.0 g of water, and dried to prepare a composition. The prepared composition was subjected to an activation treatment by holding the composition at a temperature of 800°C for 60 minutes under a nitrogen atmosphere. Finally, it was washed with hot water such that it is to be neutral and obtained a carbon material.

(Evaluation)

BET specific surface area;

The BET specific surface area of the carbon materials obtained in each of Examples 1 to 12 and Comparative Examples 1 to 3 was measured using a specific surface area measuring apparatus (manufactured by Shimadzu Corporation, product number "ASAP-2000", nitrogen gas).

Evaluation of mesopore and micropore;

The volume of mesopore and micropore of the carbon material was measured in accordance with BJH method using a pore distribution measuring apparatus (manufactured by Shimadzu Corporation, product number "ASAP-2000", nitrogen gas) .

Here, A $\times$ B was obtained with the volume of mesopore obtained as A (mL/g) and the BET specific surface area as B (m$^2$/g).

The results are shown in Table 1 below.

[Table 1]

| | Graphene layered structure | Activator | Impregnation ratio [-] | Impregnation method | Carbonization/ activation temperature [°C] | Holding time [min] | Pore structure | | | A×B | Resin amount (% by weight) |
|---|---|---|---|---|---|---|---|---|---|---|---|
| | | | | | | | BET specific surface area [m²/g] (B) | Volume of micropore [mL/g] | Volume of mesopore [mL/g] (A) | | |
| Example 1 | Presence | $K_2CO_3$ | 1 | Impregnation | 800 | 60 | 478.4 | 0.185 | 0.046 | 22.0 | 27.0 |
| Example 2 | Presence | $K_2CO_3$ | 1 | Impregnation | 900 | 60 | 325.7 | 0.126 | 0.058 | 18.9 | 10.0 |
| Example 3 | Presence | $K_2CO_3$ | 2 | Impregnation | 800 | 60 | 458.4 | 0.179 | 0.058 | 26.6 | 25.7 |
| Example 4 | Presence | $K_2CO_3$ | 1 | Physical Mixture | 800 | 60 | 323.7 | 0.127 | 0.043 | 13.9 | 27.0 |
| Example 5 | Presence | KOH | 2 | Impregnation | 800 | 60 | 332.8 | 0.129 | 0.087 | 29.0 | 16.7 |
| Example 6 | Presence | NaOH | 1 | Impregnation | 800 | 60 | 248.7 | 0.097 | 0.066 | 16.4 | 25.0 |
| Example 7 | Presence | CO2 | - | - | 800 | 120 | 325 | 0.129 | 0.043 | 14.0 | 23.0 |
| Example 8 | Presence | $K_2CO_3$ | 2 | Physical Mixture | 800 | 60 | 1500 | 0.599 | 0.147 | 220.5 | 92.0 |
| Example 9 | Presence | $K_2CO_3$ | 2 | Physical Mixture | 800 | 60 | 1100 | 0.426 | 0.06 | 66.0 | 89.7 |
| Example 10 | Presence | $K_2CO_3$ | 2 | Physical Mixture | 800 | 60 | 1270 | 0.51 | 0.129 | 163.8 | 90.1 |
| Example 11 | Presence | $K_2CO_3$ | 2 | Physical Mixture | 825 | 60 | 1719 | 0.671 | 0.367 | 630.9 | 90.2 |
| Example 12 | Presence | $K_2CO_3$ | 2 | Physical Mixture | 850 | 60 | 1503 | 0.583 | 0.485 | 729.0 | 85.7 |
| Comparative Example 1 | Presence | - | - | - | - | - | 218.5 | 0.086 | 0.032 | 7.0 | 47.9 |
| Comparative Example 2 | Absence | - | - | - | - | - | 1700 | 0.735 | 0.015 | 25.5 | 0.0 |
| Comparative Example 3 | Presence | $K_2CO_3$ | 1 | Impregnation | 800 | 60 | 21 | 0.008 | 0.061 | 1.3 | 0.0 |

Evaluation of electrostatic capacitance;

Electrostatic capacitance of an electric double layer capacitor including the carbon material obtained in each of Examples 3, 5, 7 to 12 and Comparative Examples 1 to 3 was measured.

Specifically, the carbon material of each of Examples 3, 5, 7 to 12 and Comparative Examples 1 to 3 and PTFE (manufactured by DuPont-Mitsui Fluorochemicals Co. Ltd.) as a binder were kneaded at a weight ratio of 9 : 1, and a film was formed using a rolling roller to obtain a capacitor electrode. The thicknesses of the obtained electrode films were adjusted to 70 μm to 90 μm, respectively.

The obtained capacitor electrode was vacuum-dried at 110°C for 11 hours and then punched out into two circular pieces having a diameter of 1 cm, and their weights were measured. The weight difference between the two capacitor electrodes was kept within 0.3 mg. Next, a cell was assembled using two capacitor electrodes as a negative electrode and a positive electrode with a separator interposed therebetween, and then 1.2 ml of an electrolytic solution was injected to prepare an electric double layer capacitor. These operations were carried out in an environment with a dew point of -70°C or less.

In measuring the electrostatic capacitance of the electric double layer capacitor, repeated charge/discharge characteristic measurement between 0 V and 3 V was each carried out for 3 cycles, setting the control current value to 10 mA/g (flowing a current of 10 mA per 1 g of the electrode weight), and 500 mA/g. As a result, the obtained measurement results were calculated using the following formula (1) after setting the calculation range to 1 V to 2 V. The electrostatic capacitance shown in Table 2 is a value calculated under the condition of a control current value of 10 mA/g.

$$C = I/(\Delta V/\Delta t) \ \ldots \ \text{Formula (1)}$$

In the formula (1), C is an electrostatic capacitance in units of F, and I is a discharge current value in units of A, $\Delta V$ is a difference between a starting voltage value and an end voltage value in the calculation range, in units of V, which is 1 since the range is from 2 V to 1 V, and $\Delta t$ is a time required to discharge from the starting voltage value to the end voltage value, in units of seconds.

Moreover, the electrostatic capacitance per weight was a value obtained by dividing the electrostatic capacitance calculated by the formula (1) by the total weight of the negative electrode and the positive electrode.

Evaluation of rate characteristics;

Also, rate characteristics were evaluated from the electrostatic capacitance per weight obtained as described above. In the evaluation of the rate characteristics, the electrostatic capacitance when the control current value was set to 10 mA/g was set to $C_A$, the electrostatic capacitance when the control current value was set to 500 mA/g was set to $C_B$, and the value of $C_A/C_B$ was calculated. The rate characteristics were evaluated according to the following criteria.

[Determination criteria of rate characteristic]

Good: The rate characteristics ($C_A/C_B$) are 0.7 or more
Fair: The rate characteristics ($C_A/C_B$) are 0.5 or more and less than 0.7
Poor: The rate characteristics ($C_A/C_B$) are less than 0.5
The results are shown in Table 2 below.

[Table 2]

| | Electrostatic capacitance [F/g] | Rate characteristics | |
| --- | --- | --- | --- |
| | | Numerical value | Evaluation |
| Example 3 | 8.5 | 1.01 | Good |
| Example 5 | 5.7 | 0.92 | Good |
| Example 7 | 5.5 | 0.80 | Good |
| Example 8 | 31.5 | 0.89 | Good |
| Example 9 | 19.4 | 0.85 | Good |
| Example 10 | 27.2 | 0.88 | Good |

(continued)

| | Electrostatic capacitance [F/g] | Rate characteristics | |
| --- | --- | --- | --- |
| | | Numerical value | Evaluation |
| Example 11 | 35.7 | 0.92 | Good |
| Example 12 | 30.9 | 0.94 | Good |
| Comparative Example 1 | 4.4 | 0.3 | Poor |
| Comparative Example 2 | 25 | 0.4 | Poor |
| Comparative Example 3 | 1 | 0.85 | Good |

As is apparent from Table 1, it was confirmed that the carbon materials of Examples 1 to 12 had a larger BET specific surface area than those of the carbon materials of Comparative Examples 1 and 3, and was able to increase the capacity of the electricity storage device. Also, as is apparent from Table 2, it was confirmed that the electrostatic capacitance and the rate characteristics were improved in the carbon materials of Examples 3, 5, and 7 to 12, as compared with the carbon material of Comparative Example 1. It was confirmed that the rate characteristics were improved in the carbon materials of Examples 3, 5, and 7 to 12, as compared with the carbon material of Comparative Example 2. Moreover, it was confirmed that the electrostatic capacitance was improved in the carbon materials of Examples 3, 5, and 7 to 12, as compared with the carbon material of Comparative Example 3.

**Claims**

1.  A carbon material comprising a carbon material having a graphene layered structure,
    the carbon material having a mesopore, the mesopore having a volume measured in accordance with BJH method of 0.04 mL/g or more, and
    the carbon material having a BET specific surface area of 240 $m^2/g$ or more.

2.  The carbon material according to claim 1, wherein the carbon material has a BET specific surface area of 450 $m^2/g$ or more.

3.  The carbon material according to claim 1 or 2, wherein the carbon material has a BET specific surface area of 1100 $m^2/g$ or more.

4.  The carbon material according to any one of claims 1 to 3, wherein the carbon material having a graphene layered structure is graphite or exfoliated graphite.

5.  The carbon material according to claim 4, wherein the graphite or the exfoliated graphite is partially exfoliated graphite having a graphite structure in which graphite is partially exfoliated.

6.  A carbon material comprising a carbon material having a graphene layered structure,
    the carbon material having a mesopore, and
    when a volume of the mesopore measured in accordance with BJH method is A (mL/g) and a BET specific surface area of the carbon material is B ($m^2/g$), the carbon material satisfying $A \times B \geq 10$.

7.  The carbon material according to any one of claims 1 to 6, wherein the carbon material further contains a resin and/or a resin carbide.

8.  The carbon material according to claim 7, wherein a content of the resin and/or the resin carbide is 1% by weight or more and 99.9% by weight or less.

9.  A method for producing the carbon material according to any one of claims 1 to 8, comprising:

    a mixing step of mixing graphite or primary exfoliated graphite and a resin;
    a step of further mixing an activator in the mixing step or after the mixing step to obtain a mixture; and
    a step of subjecting the mixture to an activation treatment.

**10.** The method for producing the carbon material according to claim 9, wherein in the mixing step, a composition containing the graphite or the primary exfoliated graphite and the resin is heated at a temperature of 200°C to 500°C.

**11.** The method for producing the carbon material according to claim 9 or 10, wherein in the mixing step, a mixture of the graphite or the primary exfoliated graphite, the resin and the activator is heated at a temperature of 200°C to 500°C.

**12.** An electrode material for an electricity storage device, comprising the carbon material according to any one of claims 1 to 8.

**13.** An electricity storage device comprising an electrode composed of the electrode material for an electricity storage device according to claim 12.

[FIG. 1]

| INTERNATIONAL SEARCH REPORT | International application No. |
|---|---|
| | PCT/JP2018/011781 |

**A. CLASSIFICATION OF SUBJECT MATTER**
Int.Cl.    C01B32/225(2017.01)i, C01B32/15(2017.01)i,
           C01B32/342(2017.01)i, H01G11/24(2013.01)i,
           H01G11/42(2013.01)i, H01M4/36(2006.01)i, H01M4/587(2010.01)i

**B. FIELDS SEARCHED**

Minimum documentation searched (classification system followed by classification symbols)
Int.Cl.    C01B32/00-32/991, H01G9/00-9/28, H01G11/00-11/86,
           H01M4/00-4/62, H01M4/86-4/98

Documentation searched other than minimum documentation to the extent that such documents are included in the fields searched
      Published examined utility model applications of Japan      1922-1996
      Published unexamined utility model applications of Japan    1971-2018
      Registered utility model specifications of Japan            1996-2018
      Published registered utility model applications of Japan    1994-2018

Electronic data base consulted during the international search (name of data base and, where practicable, search terms used)
      JSTPlus/JST7580/JSTChina (JDreamIII), DWPI (Derwent Innovation)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | WO 2016/039268 A1 (TOHOKU TECHNO ARCH CO., LTD.) 17 March 2016, example 3, table 2, fig. 19-20, paragraphs [0041], [0055]-[0060], [0072], claims & US 2017/0225955 A1, example 3, table 2, fig. 19-20, paragraphs [0073], [0089]-[0093], [0105], claims & EP 3192773 A1 & CN 106573780 A & KR 10-2017-0048254 A & TW 201615542 A | 1-4, 6, 12-13<br>12-13<br>5, 7-11 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 May 2018 (16.05.2018) | 12 June 2018 (12.06.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| | International application No. |
|---|---|
| | PCT/JP2018/011781 |

C (Continuation). DOCUMENTS CONSIDERED TO BE RELEVANT

| Category* | Citation of document, with indication, where appropriate, of the relevant passages | Relevant to claim No. |
|---|---|---|
| X<br>Y<br>A | TIAN, W. et al., "Unusual interconnected graphitized carbon nanosheets as the electrode of high-rate ionic liquid-based supercapacitor", Carbon, 23 April 2017, vol. 119, pp. 287-295, in particular, fig. 1-7, table 1, page 288, left column, lines 21-31, page 289, left column, lines 6-13, page 290, left column, lines 2-5, page 291, left column, line 51 to right column, line 43, page 294, left column, line 34 to right column, line 13 | 1-4, 6, 12-13<br>12-13<br>5, 7-11 |
| X<br>Y<br>A | JP 2015-202965 A (TAYCA CORPORATION) 16 November 2015, example 4, claims, tables 1-2, fig. 1, paragraphs [0011], [0023]-[0026], [0046]-[0048] (Family: none) | 1-2, 4-8, 12-13<br>12-13<br>3, 9-11 |
| X<br>Y | JP 2015-218085 A (SHINSHU UNIVERSITY) 07 December 2015, example 1, claims, table 2, fig. 2, 6, paragraphs [0005], [0008], [0029], [0037] (Family: none) | 1-6<br>7-13 |
| Y | WO 2015/098758 A1 (SEKISUI CHEMICAL CO., LTD.) 02 July 2015, claims, paragraphs [0007], [0022]-[0043], [0053]-[0057] & US 2016/0358718 A1, claims, paragraphs [0007], [0039]-[0065], [0078]-[0082] & EP 3089184 A1 & CN 105493214 A & KR 10-2016-0102111 A & TW 201539500 A | 7-11 |
| A | JP 7-161588 A (NISSHINBO INDUSTRIES, INC.) 23 June 1995, entire text & US 5838531 A, entire text & EP 660345 A1 & CA 2137324 A1 | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016143423 A
- WO 2015098758 A

- WO 2014034156 A